# EUROPÄISCHE PATENTSCHRIFT

(11) **EP 1 892 514 B1**
(45) Veröffentlichungstag und Bekanntmachung des Hinweises auf die Patenterteilung: **19.10.2011**
(21) Anmeldenummer: 07012640.4
(22) Anmeldetag: 28.06.2007
(51) Int. Cl.: G01M 17/007

(54) **Vorrichtung zur Halterung eines Fahrroboters**
Device for mounting a driving robot
Dispositif destiné à la fixation d'un robot conducteur

(30) Priorität: 25.08.2006 DE 102006040021
(43) Veröffentlichungstag der Anmeldung: 27.02.2008
(73) Patentinhaber: Stähle, Kurt, 75242 Neuhausen-Steinegg (DE)
(72) Erfinder: Stähle, dieter, 75233 Tiefenbronn (DE)
(74) Vertreter: Wacker, Jost Oliver

(56) Entgegenhaltungen:
- EP-A2- 1 387 160
- DE-A1- 3 303 588
- DE-A1- 4 433 997
- JP-A- 2005 003 591
- US-A- 5 415 034

## Beschreibung

### Technischer Hintergrund

Die Erfindung betrifft eine Vorrichtung nach dem Oberbegriff des Patentanspruchs 1.

Fahrroboter dienen dazu, die Abläufe bei der Bedienung eines Kraftfahrzeugs dadurch zu simulieren, dass Betätigungselemente für die Pedale und gegebenenfalls auch für das Lenkrad motorisch betätigt werden. Die hierfür nötigen Aggregate sind in der Regel auf oder im Bereich des Fahrersitzes des Kraftfahrzeuges angeordnet und bedürfen dort einer sicheren Fixierung, um die zu steuernden Fahrabläufe ausführen zu können.

Zur Fixierung bieten sich hierbei der Boden, das Armaturenbrett und der Fahrersitz an, mit denen der Fahrroboter über Hilfsmittel verbindbar ist.

### Stand der Technik

Es sind Vorrichtungen bekannt, bei denen die Fixierung eines Fahrroboters unter Zuhilfenahme der Sitzschienen des Fahrersitzes erfolgt:

Aus der US-5,415,034 (Figur 15) ist als dort bereits zum Stand der Technik gehörig eine Vorrichtung bekannt, bei der Fixierstangen mittels Riemen über dem Fahrersitz gehalten werden, deren unteres Ende die Sitzschienen übergreifen, was jedoch nur möglich ist, wenn die letzteren entsprechend ausgebildet sind. Eine zuverlässige Horizontalfixierung ist mit dieser Lösung nicht möglich.

Die JP-2005003591 A zeigt einen Rahmen, auf dem Betätigungselemente für die Fußpedale des Kraftfahrzeuges flexibel anordenbar sind. Dieser Rahmen ist mittels Schraubverbindungen in geeigneten Bohrungen der beiden Sitzschienen festsetzbar. Auch diese Lösung erfordert eine genaue Anpassung an eine spezifische Konstruktion von Sitzschienen, die als alleinige Halterung dienen. Vorrichtungen zur Betätigung des Lenkrades (Lenkroboter) können mit dieser Art der Befestigung nicht stabil angebracht werden.

Aus der US 3,662,593 ist ein Fahrroboter bekannt, der sich auf dem Boden abstützt und insgesamt gegenüber der Unterkante des Armaturenbrettes zur Fixierung verspannt ist. Für die Anwendung einer derartigen Lösung ist allerdings der Ausbau des Fahrersitzes erforderlich.

### Darstellung der Erfindung

Aufgabe der Erfindung ist es, eine Vorrichtung zur Halterung eines Fahrroboters der aus der genannten JP 2005003591 A bekannten Art derart weiterzubilden, dass eine universelle Anpassung an die Sitzschienen verschiedener Fahrzeugtypen ermöglicht wird und eine sichere Fixierung sowohl horizontal als auch vertikal erreicht wird.

Eine weitere Aufgabe besteht darin, eine derartige Vorrichtung so auszubilden, dass sie zur Aufnahme eines Fahrroboters geeignet ist, die auch einen Lenkroboter mit einschließen kann.

Eine weitere Aufgabe der Erfindung ist darin zu sehen, dass die Vorrichtung ohne Demontage des Fahrersitzes schnell und mit wenigen Handgriffen zu montieren und zu demontieren ist.

Diese Aufgabe wird mit den Merkmalen des kennzeichnenden Teils des Patentanspruchs 1 gelöst.

Der Grundgedanke der Erfindung ist darin zu sehen, dass das zentrale Bauelement, die längenverstellbare Adapterplatte, einerseits in den Sitzschienen in horizontaler Richtung fixierbar ist, andererseits gegen den Fahrzeugboden verspannt und somit in vertikaler Richtung fixierbar ist.

Gemäß vorteilhaften Ausgestaltungen des Erfindungsgedankens kann diese Adapterplatte dann mittels ihrerseits höhenverstellbaren Tragelementen und einer Grundplatte derart "aufgerüstet" werden, dass auf der Grundplatte eine Aufnahmefläche für die Bauteile eines Fahrroboters geschaffen wird.

Weitere Ausgestaltungen sind weiteren Unteransprüchen zu entnehmen.

### Kurze Beschreibung der Zeichnungen

Ein bevorzugtes Ausführungsbeispiel der erfindungsgemäßen Vorrichtung wird nun anhand von Zeichnungen näher erläutert, es zeigen:

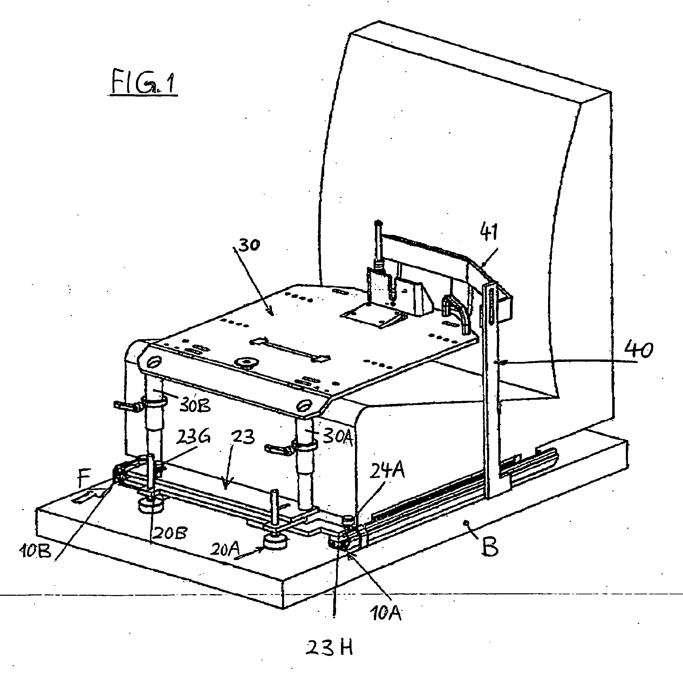

- Figur 1:: Eine perspektivische Gesamtdarstellung der Vorrichtung,

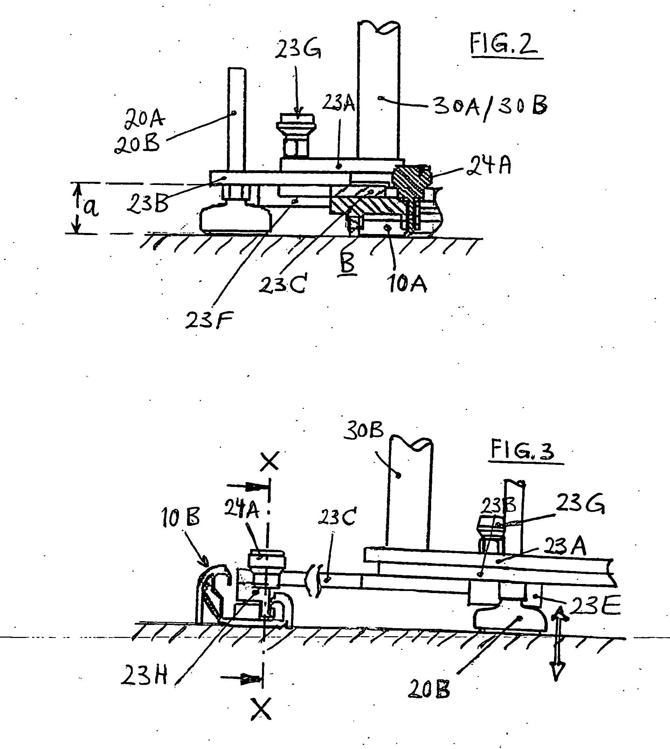

- Figur 2:: einen Längsschnitt in der Ebene X-X von Figur 3,
- Figur 3:: eine Teil-Frontansicht in Richtung des Pfeils F in Figur 1, und

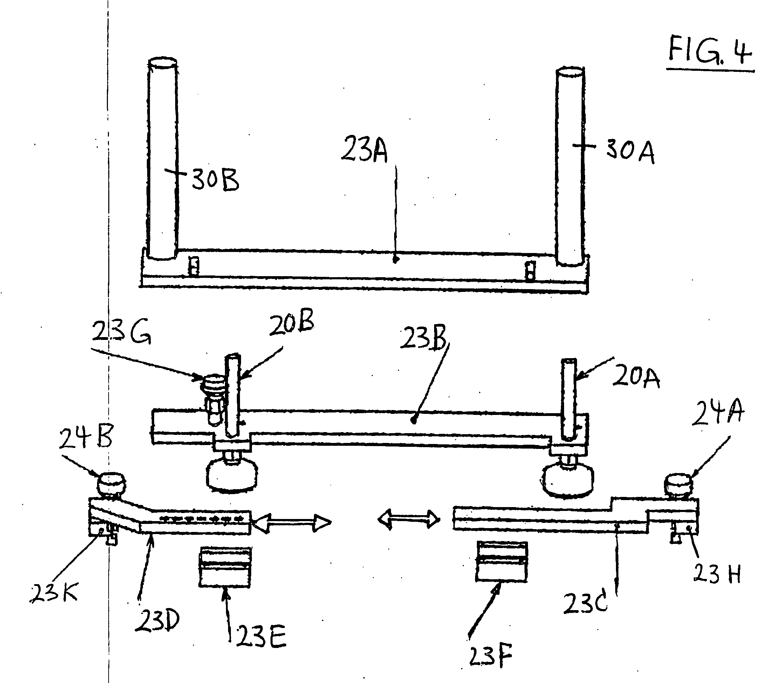

- Figur 4:: eine Explosionsdarstellung der Adapterplatte.

### Beschreibung des Ausführungsbeispiels

Zur frontalen Befestigung einer Grundplatte 30 für einen Fahrroboter dient eine mehrteilige Adapterplatte 23. Diese Adapterplatte besteht aus den folgenden Komponenten:

Eine obere Platte 23A ist zur Aufnahme von höhenverstellbaren Tragelementen 30A,30B vorgesehen, eine mittlere Platte 23B ist an der oberen Platte 23A gehalten und weist zwei gegeneinander horizontal versetzte Vorsprünge auf, durch die ein höhenverstellbares Feststellelement 20A,20B geführt ist, das sich bis zum Fahrzeugboden B erstreckt.

Der Abstand a der unteren Stirnfläche der Feststellelemente 20A,20B zur Unterseite der Platte 23B ist beispielsweise mittels eines Gewindes und einer Mutter einstellbar.

Zwei Arme 23C und 23D sind an der mittleren Platte 23B verschiebbar ausgebildet. Hierzu sind an der Unterseite der mittleren Platte 23B Führungsplatten 23E,23F gehalten, in denen die zueinander zeigenden Enden der Arme 23C und 23D horizontal verschiebbar sind. Die Arme 23C,23D können Rastlöcher (dargestellt im Arm 23D) aufweisen, in die ein Feststellelement 23G (z.B. ein Rastknopf) zur Fixierung eingreift.

Die Arme 23C und 23D greifen mit ihren gegenüberliegenden Enden in die Sitzschienen 10A,10B des Fahrzeugs ein. Hierzu weisen die äußeren Enden der beiden Arme 23C,23D einen hakenartigen Eingriff 23H,23K auf, der in das Profil der Sitzschienen 10A, 10B derart passt, dass die Adapterplatte 23 einerseits horizontal in den Sitzschienen 10A,10B verschiebbar sind, andererseits durch den Hintergriff des Eingriffs 23H,23K in das Profil der Sitzschienen 10A,10B nicht aus letzteren gehoben werden können.

Die Eingriffe 23H,23K verfügen über Gewindebohrungen, in die Feststellelemente 24A,24B einschraubbar sind, mit denen die Adapterplatte 23 in den Sitzschienen 10A, 10B horizontal fixierbar ist.

Werden die höhenverstellbaren Feststellelemente 20A,20B mittels ihrer Höhenverstelleinrichtung auf den Boden B des Fahrzeugs gepresst, erfolgt eine Abstützung der Adapterplatte, die dann das auf ihr lastende Gewicht in den Boden B überleiten kann.

Das obere Ende der teleskopartig höhenverstellbaren und mittels Feststellelementen festsetzbaren Tragelemente 30A,30B nimmt den vorderen Bereich der Grundplatte 30 auf, die verschiedene Bohrungen und Langlöcher zur Fixierung eines nicht dargestellten Fahrroboters aufweist.

Das hintere Ende der Grundplatte 30 weist eine Stützvorrichtung auf, die aus mindestens eine Vertikalstütze 40 und eine Horizontalstütze 41 besteht. Die Stützvorrichtung ist höhen- und breitenverstellbar, so dass das untere Ende der Vertikalstütze 40, das auf dem Boden B aufsitzt, so bezüglich der Grundplatte 30 verschiebbar ist, dass diese waagrecht oder auch mit einer gewünschten Neigung zur optimalen Halterung des Fahrroboters fixierbar ist.

Über die beiden Tragelemente 30A,30B und die Vertikalstütze 40 ist somit eine sichere Fixierung der Grundplatte 30 auf dem Fahrzeugboden B mit Hilfe der Sitzschienenprofile als "Gegenlager" möglich.

## Patentansprüche

1. Vorrichtung zur Halterung eines Fahrroboters eines Kraftfahrzeugs unter Verwendung der Sitzschienen des Fahrersitzes zur Fixierung, **gekennzeichnet durch** eine längenverstellbare Adapterplatte (23), die derart ausgebildet ist, dass sie in beide Sitzschienen (10A,10B) hakenähnlich eingreift, und die mit mindestens einem ersten Feststellelement (24A,24B) in den Sitzschienen (10A, 10B) arretierbar und mit mindestens einem zweiten höhenverstellbaren Feststellelement (20A,20B) gegen den Fahrzeugboden (B) verspannbar ist.

2. Vorrichtung nach Anspruch 1, **dadurch gekennzeichnet, dass** auf der Adapterplatte (23) höhenverstellbare Tragelemente (30A,30B) gehalten sind, auf denen eine Grundplatte (30) zur Aufnahme des Fahrroboters gehalten ist, deren lehnenseitiges Ende derart ausgebildet ist, dass es sich mittels einer höhen- und breitenverstellbaren Stützvorrichtung auf dem Fahrzeugboden (B) abstützt.

3. Vorrichtung nach Anspruch 1 und Anspruch 2, **dadurch gekennzeichnet, dass** die Adapterplatte (23) aus übereinander liegenden Bauteilen besteht, wobei eine obere Platte (23A) zur Aufnahme der Tragelemente (30A,30B) dient und eine mittlere Platte (23B) zur Aufnahme von zwei zweiten Feststellelementen (20A,20B).

4. Vorrichtung nach Anspruch 3, **dadurch gekennzeichnet, dass** an der Unterseite der mittleren Platte (23B) zwei Arme (23C,23D) quer zu den Sitzschienen (10A,10B) verschiebbar gehalten sind, deren äußere Enden derart ausgebildet sind, dass sie mittels Eingriffen (23H,23K) in das Profil der Sitzschienen (10A,10B) eingreiften.

5. Vorrichtung nach Anspruch 4, **dadurch gekennzeichnet, dass** in Bohrungen in den Enden der Arme (23C,23D) die ersten Feststellelemente (24A,24B) gehalten sind, die derart ausgebildet sind, dass sie die Eingriffe (23H,23K) in den Profilen der Sitzschienen (10A,10B) verklemmen.

6. Vorrichtung nach Anspruch 4, **dadurch gekennzeichnet, dass** zumindest einer der Arme (23C,23D) Bohrungen zur wahlweisen Aufnahme eines Rastknopfes (23G) afuweist, der in der mittleren Platte (23B) gehalten ist.

7. Vorrichtung nach Anspruch 2, **dadurch gekennzeichnet, dass** die Stützvorrichtung mindestens eine Vertikalstütze (40) beinhaltet, die derart ausgebildet ist, dass sie auf dem Fahrzeugboden (B) aufsitzt.

## Claims

1. A device for securing a robot driver of a motor vehicle using the seat rails of the driving seat for fixing, **characterised by** a longitudinally adjustable adapter plate (23), configured in such a way that it engages hook-like in both seat rails (10A, 10B) and can be locked in the seat rails (10A, 10B) with at least one first immobilising element (24A, 24B) and can be clamped against the vehicle floor (B) with at least one second height-adjustable immobilising element (20A, 20B).

2. A device according to claim 1, **characterised in that** on the adapter plate (23) are held height-adjustable carrier elements (30A, 30B) on which a baseplate (30) to accommodate the robot driver is held and whose end on the backrest side is configured such that it is supported off the vehicle floor (B) by means of a height-adjustable and width-adjustable support device.

3. A device according to claim 1 or claim 2 **characterised in that** the adapter plate (23) consists of superimposed parts, with one upper plate (23A) serving to accommodate the carrier elements (30A, 30B) and one middle plate (23B) to accommodate two second immobilising elements (20A, 20B).

4. A device according to claim 3 **characterised in that** on the underside of the middle plate (23B) are held two arms (23C, 23D) so as to be able to slide square to the seat rails (10A, 10B) and whose extremities are configured such that they engage in the section of the seat rails (10A, 10B) by means of catches (23H, 23K).

5. A device according to claim 4 **characterised in that** in the holes in the ends of the arms (23C, 23D) are held the first immobilising elements (24A, 24B) which are configured such that they clamp the catches (23H, 23K) in the sections of the seat rails (10A, 10B).

6. A device according to claim 4 **characterised in that** at least one of the arms (23C, 23D) exhibits holes for the optional accommodating of a detent button (23G) that is held in the middle plate (23B).

7. A device according to claim 2 **characterised in that** the support device contains at least one vertical strut (40) which is configured so that it sits on the vehicle floor (B).

## Revendications

1. Dispositif destiné à la fixation d'un robot conducteur d'un véhicule automobile, utilisant pour la fixation les glissières du siège du conducteur, **caractérisé par** une plaque d'adaptation (23) réglable en longueur qui est formée de façon qu'elle entre en prise comme un crochet dans les deux glissières de siège (10A, 10B), et qui peut être bloquée dans les glissières de siège (10A, 10B) à l'aide d'au moins un premier élément de blocage (24A, 24B) et qui peut être bloquée contre le sol du véhicule (B) à l'aide d'au moins un deuxième élément de blocage (20A, 20B) réglable en hauteur.

2. Dispositif selon la revendication 1, **caractérisé en ce que** des éléments porteurs (30A, 30B) réglables en hauteur sont maintenus sur la plaque d'adaptation (23), sur lesquels une plaque de base (30) est maintenue pour recevoir le robot conducteur, l'extrémité côté dossier de la plaque de base étant formée de façon à s'appuyer sur le sol du véhicule (B) au moyen d'un dispositif d'appui réglable en largeur et en hauteur.

3. Dispositif selon la revendication 1 ou 2, **caractérisé en ce que** la plaque d'adaptation (23) consiste en des éléments de construction situés les uns sur les autres, une plaque supérieure (23A) servant à recevoir les éléments porteurs (30A, 30B) et une plaque médiane (23B) à recevoir deux deuxièmes éléments de blocage (20A, 20B).

4. Dispositif selon la revendication 3, **caractérisé en ce que** sur le dessous de la plaque médiane (23B), deux bras (23C, 23D) sont maintenus déplaçables transversalement aux glissières de siège, et dont les extrémités extérieures sont formées de façon qu'elles entrent en prise dans le profil des glissières de siège (10A, 10B) au moyen d'éléments de prise (23H, 23K).

5. Dispositif selon la revendication 4, **caractérisé en ce que** les premiers éléments de blocage (24A, 24B) sont maintenus dans des alésages dans les extrémités des bras (23C, 23D), et sont formés de façon à serrer les éléments de prise (23H, 23K) dans les profils des glissières de siège (10A, 10B).

6. Dispositif selon la revendication 4, **caractérisé en ce qu'**au moins l'un des bras (23C, 23D) présente des alésages pour recevoir sélectivement un bouton pression (23G) maintenu dans la plaque médiane (23B).

7. Dispositif selon la revendication 2, **caractérisé en ce que** le dispositif d'appui comporte au moins un appui vertical (40) qui est formé de façon à reposer sur le sol du véhicule (B).
